**Europäisches Patentamt**

**European Patent Office**

**Office européen des brevets**

(19)

(11) Veröffentlichungsnummer: **0 179 220**
**B1**

(12) ## EUROPÄISCHE PATENTSCHRIFT

(45) Veröffentlichungstag der Patentschrift:
**20.04.88**

(51) Int. Cl.⁴: **G 01 F 23/60**

(21) Anmeldenummer: **85110407.5**

(22) Anmeldetag: **20.08.85**

(54) **Gerät zum Messen des Füllstandes einer Flüssigkeit in einem Behälter.**

(30) Priorität: **25.10.84  DE 3439087**

(43) Veröffentlichungstag der Anmeldung:
**30.04.86 Patentblatt 86/18**

(45) Bekanntmachung des Hinweises auf die Patenterteilung:
**20.04.88 Patentblatt 88/16**

(84) Benannte Vertragsstaaten:
**DE FR GB IT**

(56) Entgegenhaltungen:
**EP - A - 0 055 312**
**DE - A - 3 346 781**
**FR - A - 2 480 937**
**FR - A - 2 534 375**

(73) Patentinhaber: **VDO Adolf Schindling AG,**
**Gräfstrasse 103, D-6000 Frankfurt/Main (DE)**

(72) Erfinder: **Stengl, Reinhard, Bruchenbrücher Weg 9,**
**D-6362 Wöllstadt 1 (DE)**
Erfinder: **Haub, Martin, Friedrich-Ebert-Strasse 43,**
**D-6203 Hochheim a. M. (DE)**
Erfinder: **Rau, Karl, Thomas-Mann-Strasse 30,**
**D-6052 Mühlheim (DE)**
Erfinder: **Adamitzki, Wolfgang, Bad Sodener Strasse 18,**
**D-6231 Sulzbach (DE)**

(74) Vertreter: **Klein, Thomas, Dipl.-Ing. (FH), Sodener**
**Strasse 9 Postfach 6140, D-6231 Schwalbach a. Ts. (DE)**

**Beschreibung**

Die Erfindung betrifft ein Gerät zum Messen des Füllstandes einer Flüssigkeit in einem Behälter, insbesondere in einem Kraftstofftank eines Kraftfahrzeugs, mit einem in den Behälter ragenden Isolierstab, an dem ein entsprechend dem Füllstand auf und abbewegbarer Schwimmer geführt ist, der mittels zweier miteinander verbundener Schleifkontakte zwei entlang der Längserstreckung auf dem Isolierstab aufgebrachte Widerstandsschichten leitend miteinander verbindet.

Bei derartigen Geräten ist es bekannt, dass die Widerstandsschichten in einer Ebene nebeneinander angeordnet sind. Dabei liegen die Schleifkontakte mit einer relativ grossen Kontaktfläche an den Widerstandsschichten an.

Dies hat den Nachteil, dass sich bei Flüssigkeiten hoher Zähigkeit ein Flüssigkeitsfilm zwischen der Widerstandsschicht und dem Schleifkontakt aufbauen kann und so die Kontaktierung unterbrochen wird.

Eine Flüssigkeit, bei der dieser Nachteil auftritt, ist z.B. Dieselkraftstoff.

Aufgabe der Erfindung ist es daher, ein Gerät nach dem Oberbegriff zu schaffen, das eine sichere Kontaktierung zwischen Schleifkontakt und Widerstandsschicht gewährleistet.

Diese Aufgabe wird erfindungsgemäss dadurch gelöst, dass die Schleifkontakte an sich in Längsrichtung des Isolierstabs erstreckenden Kontaktschneiden der Widerstandsschichten in Anlage sind. Damit wird ein Flüssigkeitsfilm, der sich auf der Widerstandsbahn ausgebildet hat, durch die aneinanderliegenden Teile von Schleifkontakt und Kontaktschneide keilartig durchtrennt, so dass eine Kontaktierung sichergestellt ist. Auf die gleiche Weise werden auch Ablagerungen, die sich auf der Widerstandsschicht abgesetzt haben, durchtrennt und können die einwandfreie Kontaktierung nicht beeinflussen.

Damit die Schleifkontakte nicht nur im Bereich der Kontaktschneiden gehalten werden, sondern, sich auch immer in der optimalen Position zu den Kontaktschneiden befinden, kann der Schwimmer gegen Verdrehung um die Längsachse des Isolierstabs gesichert auf- und abbewegbar geführt sein.

Diese optimale Position gewährleistet immer eine einwandfreie Kontaktierung.

In einer einfachen Ausbildung kann dazu der Schwimmer einen radial hervorstehenden, sich in Längsrichtung des Isolierstabs erstreckenden Ansatz etwa formschlüssig umgreifen.

Weist der Isolierstab einen Vieleckquerschnitt auf, wobei die Schleifkontakte jeweils an einer eine Kontaktschneide bildenden Eckkante am Isolierstab in Anlage sind, so werden auf einfachste Weise eine Mehrzahl von Funktionen erfüllt.

Zum einen ist durch das Aufbringen je einer Widerstandsschicht zu beiden Seiten der Eckkante des Isolierstabs, wobei diese Schichten im Bereich der Eckkante miteinander verbunden sind, die Kontaktschneide einfach herstellbar.

Zum anderen kann eine Eckkante des Isolierstabs gleichzeitig den vom Schwimmer etwa formschlüssig umgriffenen Ansatz zur Verdrehsicherung bilden.

Dabei besitzt der Isolierstab vorzugsweise einen Viereckquerschnitt. Dies ermöglicht ein Aufbringen der Widerstandsschichten mit einfachen Verfahren, wie z.B. Drucken, da die Flächen, auf die die Widerstandsschichten aufgebracht werden, alle eben sind.

Besitzen die Schleifkontakte eine etwa linienförmige, sich quer zur Längsrichtung der Kontaktschneide erstreckende Kontaktfläche, so wird ein Flüssigkeitsfilm auch vom Schleifkontakt keilartig durchtrennt, wodurch die Kontaktsicherheit noch erhöht wird. Diese Ausbildung hat weiterhin noch den Vorteil, dass durch das Entlanggleiten der Kontaktfläche auf der Kontaktschneide, diese immer von Ablagerungen befreit wird, so dass eine Selbstreinigung erfolgt.

Vorzugsweise liegen die Schleifkontakte mit federnder Vorspannung an den Kontaktschneiden an.

Bei Behältern, die eine von einer zylindrischen oder prismatischen Form abweichende Form aufweisen, kann eine Anpassung des Widerstandes an die Behälterform dadurch erreicht werden, dass die Widerstandsschichten entlang ihrer Längserstreckung mit unterschiedlicher Breite ausgebildet sind. Auf diese Weise wird eine Linearisierung der Anzeige erreicht.

Sowohl eine hohe Formbeständigkeit als auch feste Unterlage für die Widerstandsschicht wird erreicht, wenn der Isolierstab ein Glasstab ist.

In einer vorzugsweisen Anordnung können Isolierstab und Schwimmer in einem mit dem Behälter kommunizierenden Tauchrohr angeordnet sein.

Ein Ausführungsbeispiel der Erfindung ist in der Zeichnung dargestellt und wird im folgenden näher beschrieben. Es zeigen

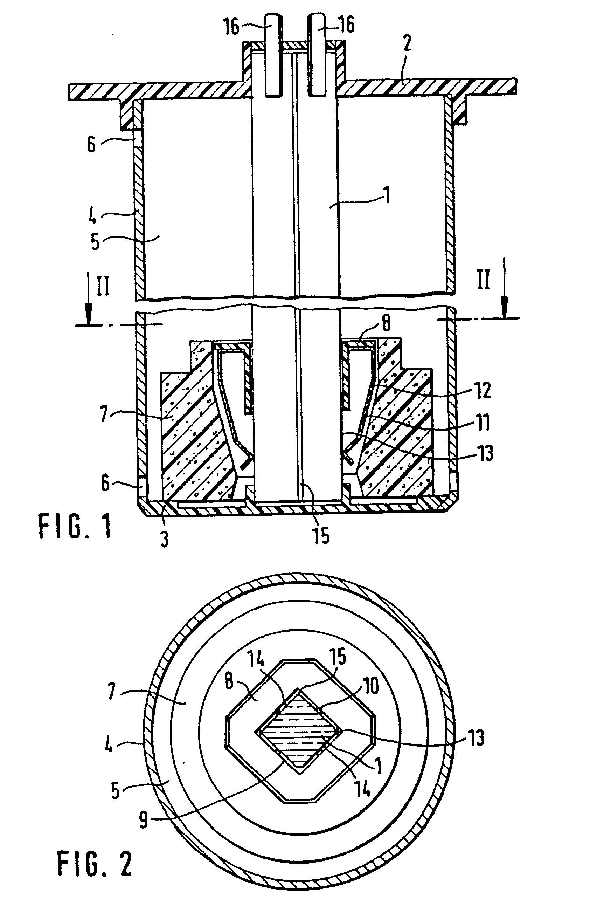

Figur 1 ein Gerät zum Messen des Füllstandes im Querschnitt

Figur 2 einen Schnitt des Geräts nach Fig. 1 entlang der Linie II-II

Das dargestellte Gerät weist einen Glasstab 1 mit einem quadratischen Querschnitt auf. Dieser Glasstab 1 ist mit seinem oderen Ende in eine Ausnehmung in einem Deckelflansch 2 und mit seinem unteren Ende in eine Ausnehmung in einem Bodenflansch 3 eingesetzt.

Mit Abstand den Glasstab 1 umschliessend und einen Ringraum 5 bildend, ist ein Tauchrohr 4 mit seinen Enden am Bodenflansch 3 und am Deckelflansch 2 befestigt.

Der Ringraum 5 ist über Ausgleichsbohrungen 6 mit dem Innenraum eines nicht dargestellten Behälters verbunden, in den das Tauchrohr 4 hineinragt und dessen Füllstand gemessen werden soll.

Den Glasstab 1 umschliessend ist an diesem ein Schwimmer 7 entsprechend dem Füllstand auf- und abbewegbar geführt. Der Schwimmer 7 besitzt dazu ein Führungsstück 8 mit einer Öffnung 9, deren Querschnitt etwa dem Querschnitt des Glasstabs 1 entspricht, wobei an den Innenwänden der Öffnung 9 hervorstehende Führungsnoppen 10 angeordnet sind, die an dem Glasstab 1 anliegen.

Durch die Führungsnoppen 10 wird die Reibung zwischen dem Glasstab 1 und dem Führungsstück 8 bei der Auf- und Abbewegung des Schwimmers 7 gering gehalten.

An dem Schwimmer 7 sind sich diametral gegenüberliegend zwei Schleifkontakte 11 angeordnet, die aus mit einem Ende am Schwimmer 7 befestigten Fererarmen 12 bestehen, deren freies Ende v-förmig ausgebildet und mit der Kante der Spitze des V unter federnder Vorspannung auf der Eckkante 13 des Glasstabs 1 in Anlage ist.

Auf dem Glasstab 1 sind Widerstandsschichten 14, z.B. durch Drucken aufgebracht, wobei jede Widerstandsschicht 14 jeweils eine Eckkante 13 umschliessend aufgebracht ist, so dass jede Eckkante 13 eine Kontaktschneide einer Widerstandsschicht 14 bildet, an der ein Schleifkontakt 11 anliegt.

Dadurch, dass der Glasstab 1 entlang der anderen, sich gegenüberliegenden Kanten eine Fase 15 besitzt, ist auf einfache Weise eine Trennung der beiden Widerstandsschichten 14 voneinander erreicht.

An dem oberen Ende des Glasstab 1 ist an jeder Widerstandsschicht 14 eine Kontaktfahne 16 angeordnet, die mit ihrem freien Ende einen Verschluss des Deckelflansches 2 nach aussen durchragt.

## Patentansprüche

1. Gerät zum elektrischen Messen des Füllstandes einer Flüssigkeit in einem Behälter, insbesondere in einem Kraftstofftank eines Kraftfahrzeuges, mit einem in den Behälter ragenden Isolierstab (1), an dem ein entsprechend dem Füllstand auf- und abbewegbarer Schwimmer (7) geführt ist, der mittels zweier miteinander verbundener Schleifkontakte (11) zwei entlang der Längserstreckung auf dem Isolierstab (1) aufgebrachte Widerstandsschichten (14) leitend miteinander verbindet, dadurch gekennzeichnet, dass die Widerstandsschichten (14) so auf dem Isolierstab (1) aufgebracht sind, dass in Längsrichtung des Isolierstabes (1) Kontaktschneiden (13) entstehen und dass die Schleifkontakte (11) an diesen Kontaktschneiden (13) der Widerstandsschichten (14) in Anlage sind.

2. Gerät nach Anspruch 1, dadurch gekennzeichnet, dass der Schwimmer (7) gegen Verdrehung um die Längsachse des Isolierstabs (1) gesichert auf- und abbewegbar geführt ist.

3. Gerät nach einem der vorhergehenden Ansprüche, dadurch gekennzeichnet, dass der Schwimmer (7) einen radial hervorstehenden, sich in Längsrichtung des Isolierstabs (1) erstreckenden Ansatz etwa formschlüssig umgreift.

4. Gerät nach einem der vorhergehenden Ansprüche, dadurch gekennzeichnet, dass der Isolierstab (1) einen Vieleckquerschnitt aufweist, wobei die Schleifkontakte (11) jeweils an einer eine Kontaktschneide bildenden Eckkante (13) am Isolierstab in Anlage sind.

5. Gerät nach Anspruch 4, dadurch gekennzeichnet, dass der Isolierstab (1) einen Viereckquerschnitt besitzt.

6. Gerät nach einem der vorhergehenden Ansprüche, dadurch gekennzeichnet, dass die Schleifkontakte (11) eine etwa linienförmige, sich quer zur Längsrichtung der Kontaktschneide (13) erstreckende Kontaktfläche besitzen.

7. Gerät nach einem der vorhergehenden Ansprüche, dadurch gekennzeichnet, dass die Schleifkontakte (11) mit federnder Vorspannung an den Kontaktschneiden (13) anliegen.

8. Gerät nach einem der vorhergehenden Ansprüche, dadurch gekennzeichnet, dass die Widerstandsschichten (14) entlang ihrer Längserstreckung mit unterschiedlicher Breite ausgebildet sind.

9. Gerät nach einem der vorhergehenden Ansprüche, dadurch gekennzeichnet, dass der Isolierstab ein Glasstab (1) ist.

10. Gerät nach einem der vorhergehenden Ansprüche, dadurch gekennzeichnet, dass Isolierstab (1) und Schwimmer (7) in einem mit dem Behälter kommunizierenden Tauchrohr (4) angeordnet sind.

## Claims

1. Apparatus for electrically measuring the filling level of a liquid in a container, in particular in a fuel tank of a motor vehicle, having an insulating rod (1) projecting into the container, on which rod there is guided a float (7), which can move up and down according to the filling level and which, by means of two interconnected sliding contacts (11), can conductively interconnect two resistance layers (14) applied to the insulating rod (1) along its longitudinal extent, characterized in that the resistance layers (14) are applied to the insulating rod (1) in such a way that contact edges (13) are produced in longitudinal direction of the insulating rod (1) and in that the sliding contacts (11) bear against with these contact edges (13) of the resistance layers (14).

2. Apparatus according to Claim 1, characterized in that the float (7) is secured against twisting about the longitudinal axis of the insulating rod (1) and is guided so that it can move up and down.

3. Apparatus according to one of the preceding Claims, characterized in that the float (7) embraces more or less positively a radially protruding piece extending in longitudinal direction of the insulating rod (1).

4. Apparatus according to one of the preceding Claims, characterized in that the insulating rod (1) has a polygonal cross-section, the sliding contacts (11) in each case bear against a corner edge (13) on the insulating rod, forming a contact edge.

5. Apparatus according to Claim 4, characterized in that the insulating rod (1) has a rectangular cross-section.

6. Apparatus according to one of the preceding Claims, characterized in that the sliding contacts (11) have a more or less linear contact area extending transversally to the longitudinal direction of the contact edge (13).

7. Apparatus according to one of the preceding Claims, characterized in that the sliding contacts (11) bear against the contact edges (13) with resilient pretension.

8. Apparatus according to one of the preceding Claims, characterized in that the resistance layers (14) are designed with different width along their longitudinal extend.

9. Apparatus according to one of the preceding Claims, characterized in that the insulating rod is a glass rod (1).

10. Apparatus according to one of the preceding Claims, characterized in that insulating rod (1) and float (7) are arranged in an immersion tube (4), communicating with the container.

## Revendications

1. Appareil pour la mesure électrique du niveau d'un liquide dans un récipient, en particulier dans un réservoir de carburant d'un véhicule à moteur, comportant une tige isolante (1) insérée dans le récipient, sur laquelle est guidé un flotteur (7) qui peut se déplacer vers le haut et vers le bas en correspondance avec le niveau, qui connecte au moyen de deux contacts frotteurs (11) reliés entre eux, deux couches résistantes (14) disposées sur la tige isolante (1) dans le sens de la longueur, caractérisé par le fait que les couches résistantes (14) sont disposées sur la tige isolante (1) de façon telle que des lames de contact (13) sont créées dans le sens de la longueur de la tige isolante (1), les contacts frotteurs (11) étant en appui contre les lames de contact (13) des couches résistantes (14).

2. Appareil selon la revendication 1, caractérisé par le fait que le flotteur (7) est guidé en déplacement vers le haut et vers le bas tout en étant bloqué en rotation sur l'axe longitudinal de la tige isolante (1).

3. Appareil selon l'une des revendications 1 ou 2, caractérisé par le fait que le flotteur (7) est engagé sur une partie en saillie radiale disposée sur la longueur de la tige isolante (1).

4. Appareil selon l'une quelconque des revendications 1 à 3, caractérisé par le fait que la tige isolante (1) présente une section polyangulaire, les contacts frotteurs (11) étant dans chaque cas en appui contre une arête d'angle (13) de la tige isolante formant une lame de contact.

5. Appareil selon la revendication 4, caractérisé par le fait que la tige isolante (1) présente une section carrée.

6. Appareil selon l'une quelconque des revendications 1 à 5, caractérisé par le fait que les contacts frotteurs (11) présentent une surface de contact sensiment linéaire disposée transversalement par rapport au sens longitudinal de la lame de contact (13).

7. Appareil selon l'une quelconque des revendications 1 à 6, caractérisé par le fait que les contacts frotteurs (11) prennent appui avec une tension initiale contre les lames de contact (13).

8. Appareil selon l'une quelconque des revendications 1 à 7, caractérisé par le fait que les couches résistantes (14) sont conformées avec des largeurs variables sur leur longueur.

9. Appareil selon l'une quelconque des revendications 1 à 8, caractérisé par le fait que la tige isolante est une tige en verre.

10. Appareil selon l'une quelconque des revendications 1 à 9, caractérisé par le fait que la tige isolante (1) et le flotteur (7) sont disposés dans un tube plongeur (4) communiquant avec le récipient.

FIG. 1

FIG. 2